# EUROPEAN PATENT APPLICATION

(11) **EP 2 568 186 A1**
(43) Date of publication of application: **13.03.2013**
(21) Application number: 11863708.1
(22) Date of filing: 01.08.2011
(51) Int. Cl.: F16C 33/20, F16C 33/14, F16C 17/00

(54) **THREE-LAYER COMPOSITE SELF-LUBRICATING SLIDING BEARING WITH MODIFIED POLYIMIDE WEAR LAYER AND PREPARATION METHOD THEREOF**

(30) Priority: 17.06.2011 CN 201110166149
(71) Applicant: Zhejiang Changsheng Sliding Bearings Co., Ltd, Jiaxing, Zhejiang 314100 (CN)
(72) Inventor: SUN, Zhihua, Jiashan, Zhejiang 314100 (CN); LU, Zhongquan, Jiashan, Zhejiang 314100 (CN)
(74) Representative: Rasch, Teija Kaarina
(86) International application number: PCT/CN2011/077866
(87) International publication number: WO 2012/171243

(57) **Abstract**

The invention discloses a three-layer composite self-lubricating sliding bearing with modified polyimide anti-wear layer, wherein a porous spherical bronze powder layer is sintered on a surface of a steel plate, characterized in that a self-lubricating sliding bearing sheet is formed by covering the porous spherical bronze powder layer with a modified polyimide anti-wear material layer, and then the self-lubricating sliding bearing sheet is manufactured into an article of sleeve-shaped sliding bearing or bearing bush or thrust washer or sliding-board or friction disc or ball seat structural part according to conventional processes. The process for manufacturing the same includes: preparation of a modified polyimide paste; sintering of spherical copper powder; preparation; coating; sintering of the modified polyimide; finish rolling; cutting and forming. The product of the invention possesses excellent performances of high stiffness, high strength, high-temperature resistance, and lead-free, and is especially applicable for the sliding bearings with heavy loading, variable loading and high PV value.

## Description

This application claims priority to Chinese Patent Application No. 201110166149.3, filed with the State Intellectual Property Office of China on June 17, 2011, entitled "THREE-LAYER COMPOSITE SELF-LUBRICATING SLIDING BEARING WITH MODIFIED POLYIMIDE ANTI-WEAR LAYER AND METHOD FOR MANUFACTURING THE SAME", the entire contents of which are incorporated herein in its entirety.

### FIELD OF THE INVENTION

The present invention relates to a sliding bearing, in particular relates to a three-layer composite self-lubricating sliding bearing with modified polyimide anti-wear layer on sliding surface thereof and the method for manufacturing the same.

### BACKGROUND ART

In 1970's, Glacier company in UK invented a DU bearing, which is a sliding bearing formed by rolling three layers of composite material, in which the lining of the friction layer employs a sintered mixture of polytetrafluoroethylene (PTFE) and lead (Pb), which is characterized by low friction, wear-resistant and self-lubricating. The emergence of the DU bearing, which replaces the fact that conventional sliding bearing must rely on oily lubrication, is a subversive revolution in sliding bearing field, and results in a great reduction of the material costs, the volume, the labor costs and the environment pollution. DU products have been still used until today, but there are a lot of disadvantages in the DU products, the one is that it contains lead, and the other one is that the friction performance and the environment applicability (high-temperature resistance) thereof are limited by the physical properties of PTFE itself, so that it is hard to be applied for the condition of high temperature and high load. Over the years, there are many investigations on the innovation of such three-layer composite sliding bearing in the art, and the studies focus on lead-free and improvement of the friction and anti-wear performance, high loading capacity and high-temperature resistance. The granted Chinese Patent ZL 200910153447 discloses a high-performance sliding bearing coated with PEEK film and manufacturing method thereof, in which the sliding bearing has high PV value, excellent anti-fatigue property, high-temperature resistance and superior anti-wear performance. The technical solution thereof is as follows: using steel plate as a substrate, sintering a layer of spherical bronze powder layer on the working surface of the substrate according to the prior art to manufacture a composite sheet having porous copper powder, which is characterized in that a layer of modified polyether ether ketone film is laminated on the spherical bronze powder layer and the contact surfaces in the molten state are mutually infiltrated and embedded by hot pressing to form a modified PEEK composite sheet, and then the sheet is cut and rolled into the sliding bearing according to the conventional process and the specifications of the sliding bearing to be processed. However, such bearings still have many deficiencies: (1) the manufacturing process is too complex, wherein the first step to obtain a high-performance sliding bearing is to control the manufacturing process and quality of the modified PEEK film in order to ensure that its performance meet the design requirements, and the second step is to ensure the bonding strength between the PEEK film and the composite sheet of porous copper powder by controlling temperature and pressure, which result in high production costs, low output, low product yield, and insufficient consistency and stability of products; and (2) there is a room to improve the performance thereof, in particular the glass transition temperature of 143 , which causes it can not be applied in the cases of high temperature over 300 °C.

### SUMMARY OF THE INVENTION

The main purpose of the present invention is to provide a three-layer composite self-lubricating sliding bearing with modified polyimide anti-wear layer and the method for manufacturing the same. The successful coming out of this product is a great improvement and technological upgrading to the traditional DU product, not only removing the hazardous substances - lead - from the DU bearing, but also greatly improving the friction and anti-wear performance, the loading capacity and high-temperature resistance of the bearing. Contrast to the high-performance sliding bearing coated with PEEK film, the present bearing presents advantages of low-cost and high-output, consistency and stability of product quality, further improvement of the performance, and further expansion of the applications.

The main material of the anti-wear layer of the present invention is polyimide (PI), which is a superior heat-resistant polymer material having the molecular weight of 100,000 or more, melting point of 388°C, and glass transition temperature of 337°C, and is still capable of maintaining good mechanical properties in a wide temperature range of -269°C ~ +400°C after filling modification and having excellent electrical insulation, wear-resistance, and high temperature radiation resistance. When the polyimide (PI) resin is filled with graphite or polytetrafluoroethylene (PTFE) material, it becomes a high performance self-lubricating material.

The three-layer composite self-lubricating sliding bearing with modified polyimide anti-wear layer of the present invention is achieved through the following technical solutions: sintering a porous spherical bronze powder layer on one surface of a steel plate, coating a modified polyimide anti-wear material layer on the porous spherical bronze powder layer to form a self-lubricating sliding bearing sheet, and then manufacturing the self-lubricating sliding bearing sheet into an article of sleeve-shaped sliding bearing or bearing bush or thrust washer or sliding-board or friction disc or ball seat structural part according to the conventional processes.

The raw materials of said modified polyimide anti-wear material include by weight percentage of: 10 to of 30% polytetrafluoroethylene, 5 to 12% of molybdenum disulfide, 5 to 12% of graphite and the balance of polyimide.

The process for manufacturing above-mentioned three-layer composite self-lubricating sliding bearing with modified polyimide anti-wear layer includes the following steps:

(1) Preparation of a modified polyimide paste:

A. Ingredients (by weight): 10 to 30% of polytetrafluoroethylene with particle diameter of 3 - 6 µm, 5 to 12% of molybdenum disulfide with particle diameter of 5 - 10 µm, 5 to 12% of graphite with particle diameter of 5 ~ 10 µm, and the balance of polyimide solution with a solid content of 15 to 30%, the value of the balance is based on the solid content in the solution.

B. Mixing: mixing the PTFE, the molybdenum disulfide, and the graphite in the above-mentioned ingredients into a mixture;

C. Preparation of the paste: adding the polyimide solution into the mixture with stirring to form the modified polyimide paste;

(2) Sintering of spherical copper powder: spreading the spherical bronze powder onto the steel sheet uniformly and then sintering into a porous copper powder composite sheet according to the prior art;

(3) Preparation: stirring the prepared modified polyimide paste 10 minutes again prior to use;

(4) Coating: coating the resulting modified polyimide paste onto the copper powder surface of the preheated porous copper powder composite sheet by using scraping-coat, brush-coat, or spraying-coat process, the typical thickness of the paste being 0.08 - 0.15 mm; when the paste thickness is required to be 0.30 - 0.60 mm, extruding the resulting modified polyimide paste by twin-screw extruder and continuously coating on the porous copper powder composite sheet and then strickling;

(5) Sintering of the modified polyimide: further sintering the coated porous copper powder composite sheet at 370 ~ 385 under protection of nitrogen and oxygen-free with time period of 25 to 30 minutes, to form a modified polyimide composite sheet;

(6) Finish rolling: finish rolling the dried, sintered modified polyimide composite sheet on rolling mill into the required thickness, to form a self-lubricating sliding bearing sheet;

(7) Cutting: cutting the self-lubricating sliding bearing sheet according to the specifications of the bearing;

(8) Forming: stamping, rolling, shaping, and turning it into a three-layer composite self-lubricating sliding bearing with modified polyimide anti-wear layer.

Polyimide is one of the best engineering plastics in term of heat resistance with different grades, molecular weights and modified fillers, such as thermal deformation temperature of 360 °C at 1.8 MPa, and some of which can withstand 290 °C for a long time and high temperature of 490 °C for a short time. In addition, it has good mechanical properties, fatigue resistance, flame resistance, dimensional stability and electrical properties and small forming shrinkage. It also has excellent anti-abrasion and anti-wear performance, especially when polyimide is filling modified by solid lubricant such as polytetrafluoroethylene, molybdenum disulfide, and graphite, the anti-abrasion and anti-wear performance thereof is also improved, while the steel sheet provides for the mechanical strength of the bearing substrate, and the middle sintered spherical bronze powder layer provides a media for bonding between the modified polyimide anti-wear material and the steel sheet. Meanwhile, since the copper alloy layer has relatively high thermal conductivity, the friction heat generated when the sliding bearing is operating can be transferred remarkably, and the sliding bearing is characterized in that the ingredients of the porous spherical bronze powder layer and the polyimide-based friction layer are lead-free.

The three-layer composite self-lubricating sliding bearing with modified polyimide anti-wear layer manufactured by the above structure and process has excellent performances such as high stiffness, high strength, high-temperature resistance, abrasion resistance, and lead-free, especially suitable for the sliding bearing of heavy loads, variable loads, and high PV value, such as high pressure plunger pumps, large displacement high pressure gear pump, vane pump, hydraulic motor, compressor, turbine, automotive engine tension wheel as well as the self-lubricating sliding bearing applied for aerospace, military and other applications. The performance thereof is far superior to the traditional DU products, and the technical indexes such as compressive strength, etc., are significantly improved comparing with PEEK-coated high-performance sliding bearing, particularly its efficiency and manufacturing cost are significantly advantageous in term of the rolling strips automated production line when comparing with the production of PEEK-coated short strip sheet.

### BRIEF DESCRIPTION OF THE DRAWINGS

Figure 1 is a cross-section view of the three-layer composite self-lubricating sliding bearing with modified polyimide anti-wear layer;

Figure 2 is a flowchart of manufacturing the three-layer composite self-lubricating sliding bearing with modified polyimide anti-wear layer.

Reference numbers: 1: steel sheet; 2: porous spherical bronze powder layer; 3: modified polyimide anti-wear layer.

### DETAILED DESCRIPTION

Hereinafter, preferred embodiments of the present invention will be described in detail in connection with examples in order for a person skilled in the art to further understand the invention. However, it should be understood that all those descriptions are only used to further illustrate the features and advantages of the invention, rather than limiting the claims of the invention.

Hereinafter, the invention will be further described by the drawings and specific embodiments:

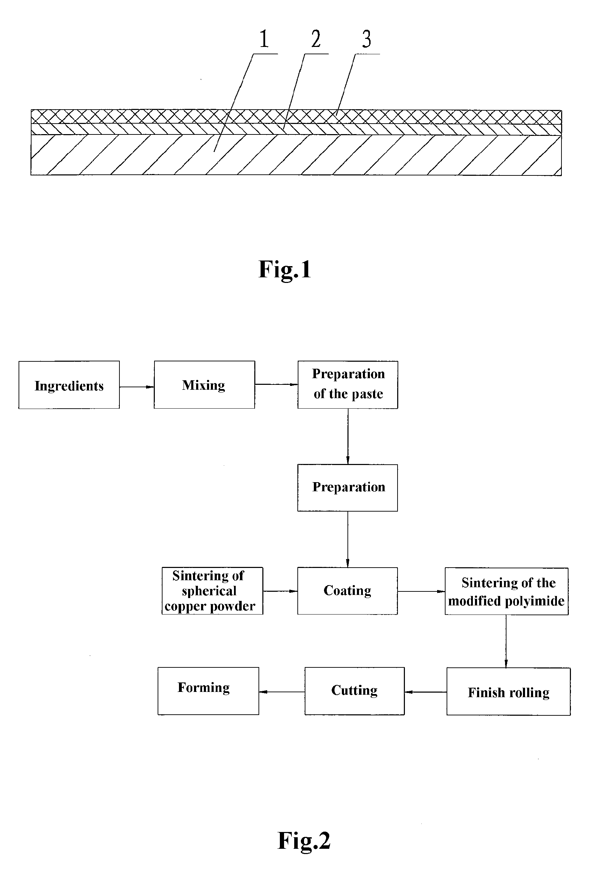

Figure 1 is a cross-section view of the three-layer composite self-lubricating sliding bearing with modified polyimide anti-wear layer. It can be seen from the figure, a porous spherical bronze powder layer 2 is sintered on a surface of the steel plate 1, and a modified polyimide anti-wear material layer 3 is covered on the porous spherical bronze powder layer 2 to form a self-lubricating sliding bearing sheet, and then the self-lubricating sliding bearing sheet is manufactured into an article of sleeve-shaped sliding bearing or bearing bush or thrust washer or sliding-board or friction disc or ball seat structural part according to the conventional process.

The raw materials of said modified polyimide anti-wear material include by weight percentage of: 10 to 30% of polytetrafluoroethylene, 5 to 12% of molybdenum disulfide, 5 to 12% of graphite and the balance of polyimide.

The process for producing said three-layer composite self-lubricating sliding bearing with modified polyimide anti-wear layer is illustrated by flowchart shown in Figure 2, which includes the following steps:

(1) Preparation of a modified polyimide paste:

A. Ingredients (by weight): 10 to 30% of polytetrafluoroethylene with particle diameter of 3 - 6 µm, 5 to 12% of molybdenum disulfide with particle diameter of 5 ~ 10 µm, 5 to 12% of graphite with particle diameter of 5 ~ 10 µm, and the balance of a polyimide solution with a solid content of 15 %, the balance based on the solid content in the solution, and the polyimide solution is commercially available.

The specific weight parts of the raw materials are listed in the following table (unit: kilogram)

| Name of the raw materials | Example 1 | Example 2 | Example 3 | Example 4 | Example 5 |
|---|---|---|---|---|---|
| PTFE | 10 | 20 | 15 | 18 | 30 |
| molybdenum disulfide | 12 | 5 | 8 | 10 | 11 |
| graphite | 6 | 5 | 5 | 12 | 6 |
| solid content in the polyimide solution | 72 | 70 | 72 | 60 | 53 |

The subsequent procedures are performed in accordance with the following steps with an exception that the ingredients are adopted according to the above table.

B. Mixing: mixing the PTFE, the molybdenum disulfide, and the graphite in the above-mentioned ingredients into a mixture;

C. Preparation of the paste: adding the polyimide solution into the mixture with stirring to form the modified polyimide paste;

(2) Sintering of spherical copper powder: uniformly spreading the spherical bronze powder onto the steel sheet and then sintering into a porous copper powder composite sheet according to the prior art;

(3) Preparation: stirring the prepared modified polyimide paste 10 minutes again prior to use;

(4) Coating: coating the resulting modified polyimide paste onto the copper powder surface of the preheated porous copper powder composite sheet by using scraping-coat, brush-coat, and spraying-coat process, the typical thickness of the paste being 0.08 - 0.15 mm; when the paste thickness is required to be 0.30 - 0.60 mm, extruding the resulting modified polyimide paste by twin-screw extruder and continuously coating on the porous copper powder composite sheet and then strickling;

(5) Sintering of the modified polyimide: further sintering the coated porous copper powder composite sheet at 370 ~ 385 under protection of nitrogen and oxygen-free with during time of 25 to 30 minutes, to form a modified polyimide composite sheet;

(6) Finish rolling: finish rolling the dried, sintered modified polyimide composite sheet on rolling mill into the required thickness, to form a self-lubricating sliding bearing sheet;

(7) Cutting: cutting the self-lubricating sliding bearing sheet according to the specifications of the bearing;

(8) Forming: stamping, rolling, shaping, and turning processing it into a three-layer composite self-lubricating sliding bearing with modified polyimide anti-wear layer.

In order to understand the friction and wearing properties of the work surface of the bearing coated with the modified polyimide and the conventional modified PEEK and PTFE, three different sliding bearings are produced respectively, that is, Example 1, Comparative Example 1 and 2, to perform two different type tests of the friction and wear properties.

(I) Dry Friction Test

Testing apparatus: Friction and Wearing Test Machine MPV-20

Size of Samples: Φ39×Φ35×20

Testing conditions: dry friction;

for friction shaft: 45# steel, hardness: HRC42 ~ 47;

testing ambient temperature: 23°C;

velocity V: 0.5m/s;

loading (P): from initial 1 MPa, and then laoding 0.8 MPa per 10 minutes;

ultimate temperature rise: 150°C;

testing duration: 100 minutes.

The samples of Example 1 are listed in the following table (modified PI)

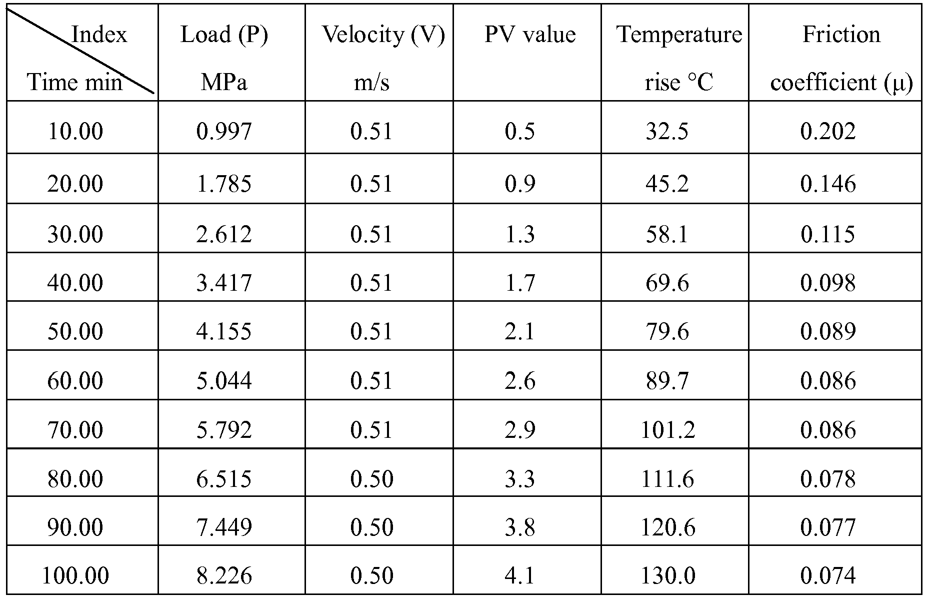

Final value of PV: 4.07;
Final temperature: 130°C;
Final abrasion amount: 0.014 mm;
Averaged friction coefficient: 0.105.

Comparative Example 1 (PEEK)

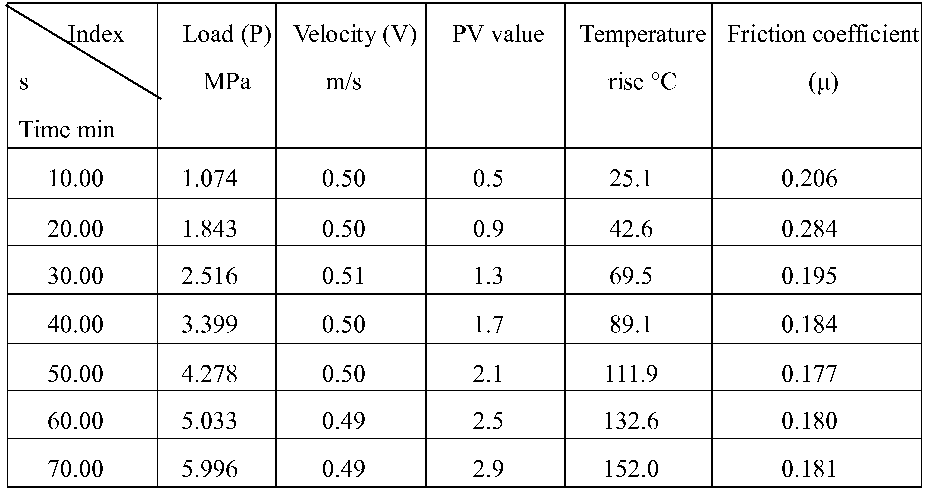

Final value of PV: 3.05;
Final temperature: 152°C;
Final abrasion amount: 0.050 mm;
Averaged friction coefficient: 0.202;
Testing duration: 70 minutes (test ends since the temperature exceeds the limit value)

Summary: as seen from the comparison between Example 1 and Comparative Example 1 of the dry friction test, under the same test conditions, Example 1 successfully pass over 100 minutes test; whereas Comparative Example 1 is ended at 70 minutes of the test since the temperature rise reaches 152°C which goes beyond the limiting value of 150°C. As seen from the final results, Example 1 is far superior to Comparative Example 1 in terms of the final PV value, the final temperature, the final abrasion amount and averaged friction coefficient.

### (II) Oil lubricating test:

Testing apparatus: Frictio n and Wearing Test Machine MPV-20
Size of Samples: Φ39×Φ35×20
Testing conditions: oil-submersion lubrication: 32# engine oil;
for friction shaft: 45# steel, hardness: HRC42 ~ 47;
testing ambient temperature: 23°C;
velocity V: 5m/s;
loading (P): 23 MPa;
testing duration: 8 hr.

The test results are listed in the following table.

| Comparison of three sliding bearings | Frictional coefficient | Temperat ure rise (°C) | Duration (h) | Abrasion amount (mm) |
|---|---|---|---|---|
| Example 1 (Modified PI) | 0.0137 | 130.6 | 8 | 0.015 |
| Comparative Example 1 (PEEK) | 0.0247 | 185.6 | 8 | 0.024 |
| Comparative Example 2 (PTFE) | n.a. | 180.0 | 0.2 | The frictional surface is peeled off by occlusion |

Summary: as seen from the comparison of the friction and wearing properties under oil-submersion lubrication among the above sliding bearings, it can be resulted that when the three-layer composite self-lubricating sliding bearing with modified polyimide anti-wear layer of the invention (Example 1) is compared with the PEEK-coated high-performance sliding bearing (Comparative Example 1), Example 1 is significantly superior to Comparative Example 1 in terms of the abrasion amount and the temperature rise under the above-mentioned conditions. As for the conventional PTFE-based DU product (Comparative Example 2), when the test duration time reaches 12 minutes, the loads at the loading stage is only 15 MPa, and the temperature rise attains 180°C, the test failed because the fictional surface is peeled off by occlusion. Accordingly, the comparison between Example 1 and Comparative Example 2 can not be performed from the testing results.

The above friction and wearing properties tests of dry friction and oil-submersed lubrication show that: compared to the PEEK-coated high-performance sliding bearing and the PTFE-based three-layer composite self-lubricating sliding bearing, the three-layer composite self-lubricating sliding bearing with modified polyimide anti-wear layer of the invention has unprecedented excellent anti-wear performance.

The three-layer composite self-lubricating sliding bearing with modified polyimide anti-wear layer of the invention and the process of manufacturing the same have been described through the examples, and it is obvious for the skilled in the art to change or suitably modify and combine the three-layer composite self-lubricating sliding bearing with modified polyimide anti-wear layer disclosed herein to achieve the invention without deviating the contents, spirits and scopes of the invention. It is especially noted that it is obvious for the skilled in the art to design similar replacements and modifications, all of which should been considered as falling into the sprits, scopes and contents of the invention.

## Claims

1. A three-layer composite self-lubricating sliding bearing with modified polyimide anti-wear layer, wherein a porous spherical bronze powder layer is sintered on a surface of a steel plate, **characterized in that** a self-lubricating sliding bearing sheet is formed by covering the porous spherical bronze powder layer with a modified polyimide anti-wear material layer, and then the self-lubricating sliding bearing sheet is manufactured into an article of sleeve-shaped sliding bearing or bearing bush or thrust washer or sliding-board or friction disc or ball seat structural part according to conventional processes.

2. The three-layer composite self-lubricating sliding bearing with modified polyimide anti-wear layer according to claim 1, **characterized in that** the raw materials of said modified polyimide anti-wear material include by weight percentage of: 10 to 30% of polytetrafluoroethylene, 5 to 12% of molybdenum disulfide, 5 to 12% of graphite and the balance of polyimide.

3. The three-layer composite self-lubricating sliding bearing with modified polyimide anti-wear layer according to claim 2, **characterized in that** said polytetrafluoroethylene has a particle diameter of 3 - 6 µm; said molybdenum disulfide has a particle diameter of 5 - 10 µm; said graphite has a particle diameter of 5 - 10 µm; the polyimide is a polyimide solution with a solid content of 15 to 30%.

4. A process for manufacturing the three-layer composite self-lubricating sliding bearing with modified polyimide anti-wear layer according to claim 1 or claim 2 or claim 3, **characterized in that** the process includes the following steps in sequence:
(1) Preparation of a modified polyimide paste:
A. Ingredients (by weight): 10 to 30% of polytetrafluoroethylene with particle diameter of 3 - 6 µm, 5 to 12% of molybdenum disulfide with particle diameter of 5 - 10 µm, 5 to 12% of graphite with particle diameter of 5 - 10 µm, and the balance of polyimide, the value of the balance is based on the solid content in the solution.
B. Mixing: mixing the polytetrafluoroethylene, the molybdenum disulfide, and the graphite in the above-mentioned ingredients homogeneously into a mixture;
C. Preparation of the paste: adding the polyimide solution into the mixture with stirring to form the modified polyimide paste;
(2) Sintering of spherical copper powder: spreading the spherical bronze powder onto the steel sheet uniformly and then sintering into a porous copper powder composite sheet according to the prior art;
(3) Preparation: stirring the prepared modified polyimide paste 10 minutes again prior to use;
(4) Coating: coating the resulting modified polyimide paste onto the copper powder surface of the preheated porous copper powder composite sheet by using scraping-coat, brush-coat, and spraying-coat process, the typical thickness of the paste being 0.08 - 0.15 mm; when the paste thickness is required to be 0.30 - 0.60 mm, extruding the resulting modified polyimide paste by twin-screw extruder and continuously coating on the porous copper powder composite sheet and then strickling;
(5) Sintering of the modified polyimide: further sintering the coated porous copper powder composite sheet at 370 ~ 385 under protection of nitrogen and oxygen-free with a time period of 25 to 30 minutes, to form a modified polyimide composite sheet;
(6) Finish rolling: finish rolling the dried, sintered modified polyimide composite sheet on rolling mill into the required thickness, to form a self-lubricating sliding bearing sheet;
(7) Cutting: cutting the self-lubricating sliding bearing sheet according to the specifications of the bearing;
(8) Forming: stamping, rolling, shaping, and turning it into a three-layer composite self-lubricating sliding bearing with modified polyimide anti-wear layer.

5. The process according to claim 4, **characterized in that** in step (1), said polytetrafluoroethylene has a particle diameter of 3 - 6 µm; said molybdenum disulfide has a particle diameter of 5 - 10 µm; said graphite has a particle diameter of 5 - 10 µm; the polyimide is a polyimide solution with a solid content of 15 to 30%.
